# EUROPEAN PATENT SPECIFICATION

(11) **EP 3 154 227 B1**
(45) Date of publication and mention of the grant of the patent: **06.04.2022**
(21) Application number: 14893961.4
(22) Date of filing: 21.08.2014
(51) Int. Cl.: H04L 12/723, H04L 12/721, H04L 12/703

(54) **PACKET TRANSMISSION METHOD, NODE, PATH MANAGEMENT SERVER AND STORAGE MEDIUM**
PAKETÜBERTRAGUNGSVERFAHREN, KNOTEN, PFADVERWALTUNGSSERVER UND SPEICHERMEDIUM
PROCÉDÉ DE TRANSMISSION DE PAQUETS, NOEUD, SERVEUR DE GESTION DE TRAJET, ET SUPPORT DE STOCKAGE

(30) Priority: 05.06.2014 CN 201410247991
(43) Date of publication of application: 12.04.2017
(73) Proprietor: ZTE Corporation, Shenzhen city, Guangdong 518057 (CN)
(72) Inventor: LIAO, Ting, Shenzhen Guangdong 518057 (CN); HU, Fangwei, Shenzhen Guangdong 518057 (CN); WU, Bo, Shenzhen Guangdong 518057 (CN); FAN, Liang, Shenzhen Guangdong 518057 (CN)
(74) Representative: Giraldi, Elisa
(86) International application number: PCT/CN2014/084938
(87) International publication number: WO 2015/184687

(56) References cited:
- CN-A- 101 325 584
- CN-A- 102 006 218
- CN-A- 102 624 598
- JP-A- 2015 159 486
- PREVIDI S ET AL: "IPv6 Segment Routing Header (SRH); draft-previdi-6man-segment-routing-header- 00.txt", IPV6 SEGMENT ROUTING HEADER (SRH); DRAFT-PREVIDI-6MAN-SEGMENT-ROUTING-HEADER- 00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 6 March 2014 (2014-03-06), pages 1-22, XP015097489, [retrieved on 2014-03-06]

## Description

### Technical Field

The present invention relates to a data transmission technology of a communication system, in particular to a message transmission method, nodes, path management servers and a storage medium.

### Background

Segment Routing (SR) technology refers to a technology of superposing a layer of node information that influences an existing message transmission path outside a data message based on routing of a source address, and transmitting the message using the shortest path according to the node information carried by the data message. When a message containing a segment routing message header is transmitted in an SR domain, a network device performs a corresponding operation according to a segment operation indicator in the segment routing message header. Through a designated path forwarding function of SR, complex network functions such as load balance and quick rerouting of a network can be conveniently realized. When the segment operation indicator is extended to a routing indicator based on a service or topology, segment routing may also realize service-based network virtualization and applications in terms of operation, management and maintenance.

SR technology fully utilizes the existing Multi-Protocol Label Switching (MPLS) technology and Internet Protocol Version 6 (IPv6) technology to carry a SR Header in a message header of an MPLS network or a message header of an IPv6 network; and SR technology is compatible with and inherits features of forwarding a data plane through MPLS, and does not need to modify the message header of MPLS when forwarding of segment routing is performed.

In MPLS data packaging, a segment list in the SR Header is described by means of a label stack, a segment label carried by the message will be peeled off layer by layer in a message transmission process, so as to enable the message to lose a source segment identity (ID) and segment ID sequence information. In the message transmission process, if a transmission link fails and consequently a message loss is caused, since the message does not have the source node address information and segment ID sequence information of the message, a failure node cannot notify an upstream node thereof to perform switching of the message path.

In the message transmission process, when the transmission link fails, since an intermediate forwarding node of a message transmission network cannot carry all segment list information, a source node and an upstream node of the message cannot be determined, and if only a global label forwarding mode is depended, it is very likely to form a message transmission ring, thereby resulting in unreasonable utilization of network bandwidth.

The document "IPv6 Segment Routing Header (SRH); draft-previdi-6man-segmentrouting-header-00.txt" discloses that the segment routing architecture can be applied to the IPv6 data plane with the addition of a new type of Routing Extension Header. Document JP2015159486A gives an another example of path management, applied to segment routing technology.

### Summary of the Invention

In view of this, the embodiments of the present invention expect to provide a message transmission method, nodes, path management servers and a storage medium, which can implement quick notification of link faults and quick switching of message transmission paths.

The above problem is solved by a message transmission method according to claim 1 and a node according to claim 3 and a path management server according to claim 8 and a computer storage medium according to claim 9.

Further improvements and embodiments are provided in the dependent claims.

The present invention is defined by the appended claims. Embodiments, which do not fall within the scope of the appended set of claims are to be interpreted as background information, useful for understanding the invention.

### Brief Description of Drawings

FIG. 1 illustrates a processing flowchart of a message transmission method according to an embodiment of the present invention.
FIG. 2 illustrates a schematic diagram of a component structure of a routing label according to an embodiment of the present invention.
FIG. 3 illustrates a schematic diagram of a first message format carrying a routing label according to an embodiment of the present invention.
FIG. 4 illustrates a schematic diagram of a second message format carrying a routing label according to an embodiment of the present invention.
FIG. 5 illustrates a schematic diagram of a third message format carrying a routing label according to an embodiment of the present invention.
FIG. 6 illustrates a basic flowchart of performing management and notification to an LIST ID according to an embodiment of the present invention.
FIG. 7 illustrates a schematic diagram of a network topology structure according to an embodiment of the present invention.
FIG. 8 illustrates a processing flowchart of application embodiment one of a message transmission method according to an embodiment of the present invention.
FIG. 9 illustrates a processing flowchart of application embodiment two of a message transmission method according to an embodiment of the present invention.
FIG. 10 illustrates a detailed flowchart of performing management and notification to an LIST ID according to an embodiment of the present invention.
FIG. 11 illustrates a schematic diagram of a component structure of a node according to an embodiment of the present invention.
FIG. 12 illustrates a schematic diagram of a component structure of a path management server according to an embodiment of the present invention.
FIG. 13 illustrates a schematic diagram of a component structure of another node according to an embodiment of the present invention.
FIG. 14 illustrates a schematic diagram of a component structure of another node according to an embodiment of the present invention.
FIG. 15 illustrates a schematic diagram of a component structure of another path management server according to an embodiment of the present invention.
FIG. 16 illustrates a schematic diagram of a component structure of another node according to an embodiment of the present invention.

### Specific Embodiments

In the embodiments of the present invention, a routing label and segment list information are carried in a message, and are transmitted along with the message in a message transmission process; the routing label is used for indicating that the message carries the segment list information; the segment list information is used for representing a transmission path of the message; herein, the segment list information includes a segment list or a LIST ID.

Further, in the message transmission process, when a link between a first node and a second node fails, the first node acquires an upstream node of the first node according to the segment list information and sends a notification to the upstream node;
or, a standby path for message transmission is configured or computed in advance in various nodes according to the segment list information, and when the link between the first node and the second node fails in the message transmission process, the first node switches a message transmission path to the standby path.

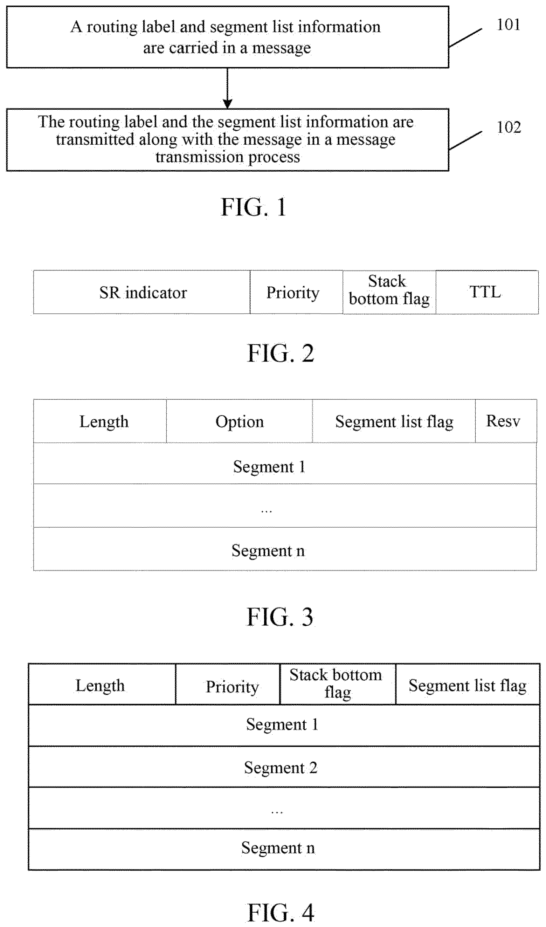

In an embodiment of the present invention, a processing process of a message transmission method, as illustrated in FIG. 1, includes the following steps:
in step 101, a routing label and segment list information are carried in a message, herein the routing label is used for indicating that the message carries the segment list information, and the segment list information is used for representing a transmission path of the message;
herein, the segment list information includes: a segment list or a LIST ID;
the routing label has a length of 32 bits, and the component structure of the routing label, as illustrated in FIG. 2, includes: an SR indicator field, a priority field, a stack bottom flag field and a Time To Live (TTL) field; specifically, the SR indicator field is used for filling a routing label value, and the routing label value may be specified by Internet Assigned Numbers Authority (IANA); and the priority field, the stack bottom flag field and the TTL field respectively have the same meanings as the priority, stack bottom flag and TTL in the existing MPLS label.

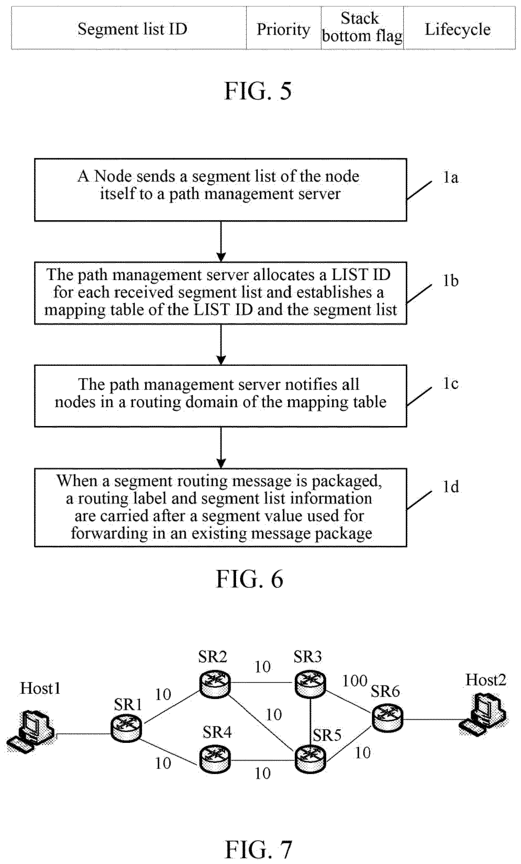

A message format carrying the routing label and the segment list information includes three formats, as illustrated in FIG. 3, FIG. 4 and FIG. 5, respectively; herein, when the segment list information is a segment list, the formats of the message carrying the segment list information are as illustrated in FIG. 3 and FIG. 4; and the segment list includes: a length field, an option field, a segment list flag field, a reserved field and a segment value. When the segment list information is the LIST ID, the format of the message carrying the segment list information is as illustrated in FIG. 5.

A first message format carrying the routing label and the segment list information illustrated in FIG. 3 includes: a Length field, an Option field, a Segment List Flag field, a Resv field and a Segment field; herein the Length field represents a length of the segment list information by taking 32 bits as a unit, i.e., if the Length field is 1, it indicates that the length of the carried segment routing information is 32 bits, i.e., one segment value is carried thereafter. If the Length field is 2, the length of the carried segment routing information is 64 bits, i.e., two segment values are carried thereafter, and so on. The Option field represents the option field of the message and is used for carrying flag information; the Segment List Flag field represents a specific segment value in the carried segment list, and the segment value represents specifically passed segments and is represented by a segment ID value, i.e., a segment node identity value, for example, a 1st location bit, i.e., Segment 1, represents carrying an Ingress Segment, a 2nd location bit, i.e., Segment 2, represents carrying an Egress Segment, a 3rd location bit, i.e., Segment n(n=3), represents carrying a Segment List, and 4th-12th location bits, i.e., Segment n(n=4~12), may be defined according to actual needs; and Resv represents reservation and is used for subsequent extension.

For example, supposing that the message does not carry the Egress Segment but only carries the Ingress Segment and the Segment List, a first bit of the Segment List Flag is 1, a second bit of the Segment List Flag is 0, and a third bit of the Segment List Flag is 1; correspondingly, a first record of the segment list is the Ingress Segment, and a second record to a (n+1)th record of the segment list are a segment value in the Segment List, i.e., Segment 1-Segment n.

A second message format carrying the routing label and the segment list information illustrated in FIG. 4 is that the original label location is extended and represented as the Length field and the TTL field is extended and represented as the Segment List Flag field on the basis of the existing MPLS format; herein the definitions and formats of the Length field and the Segment List Flag are the same as that in the message format illustrated in FIG. 3, and a lengthextensible segment value with a corresponding length is carried according to the length field.

A third message format carrying the routing label and the segment list information illustrated in FIG. 5 includes: a SEGMENT LIST ID, a priority, a stack bottom flag and a TTL; herein the SEGMENT LIST ID is used for mapping different Segment List values with an optional length by a fixed length and reducing message packaging length overhead of the specific Segment List, e.g., the length thereof may be the same as the length of the existing label value, and the priority field, the stack bottom flag field and the TTL field respectively have the same meaning as the priority, the stack bottom flag and the TTL in the existing MPLS label.

When the segment list information is the LIST ID, a basic process of performing management and notification to the LIST ID, as illustrated in FIG. 6, includes the following steps:
in step 1a, a node sends a segment list of the node itself to a path management server;
herein, the path management server is used for managing segment routing information in an SR domain; the path management server may be a node in a routing domain or may be located on an exterior controller or server; and when the path management server is located on the exterior controller or server, it may be a path computation element (PCE) server, a node, an Interface to routing system 12RS Client, a Client or a controller of OpenFlow.

When the path management server is the node in the routing domain, other nodes except the node used as the path management server send segment lists of the other nodes themselves to the path management server through Interior Gateway Protocol (IGP).

When the path management server is an exterior controller or server, the node sends the segment list of the node itself to the path management sever through a designated protocol, e.g., 12RS protocol, Border Gateway Protocol-Link State (BGP-LS) protocol or Open Flow protocol.

In step 1b, the path management server allocates a LIST ID for each segment list received and establishes a mapping table of the LIST ID and the segment list.

In step 1c, the path management server notifies all nodes in a routing domain of the mapping table;
specifically, the protocol used by the path management server to notify all nodes in the routing domain of the mapping table is the same as the protocol used by the node to send the segment list of the node itself to the path management server.

In step 1d, when a segment routing message is packaged, a routing label and segment list information are carried after a segment value for forwarding in an existing message package.

In step 102, the routing label and the segment list information are transmitted along with the message in a message transmission process.

Further, in the message transmission process, when a link between a first node and a second node fails, the method further includes the following step:
In step 103, the first node acquires an upstream node of the first node according to the segment list information and sends a notification to the upstream node;
here, the notification is a link failure notification.

Or, the method of the embodiment of the present invention further includes that: a standby path for message transmission is configured or computed in advance at each node according to the segment list information.

Correspondingly, in the message transmission process, when the link between the first node and the second node fails, the method further includes the following step:
In step 103', the first node switches a message transmission path to the standby path;
here, a standby path for message transmission is configured or computed at each node in the message transmission process according to the message transmission path indicated by the segment list information; the standby path is acquired through computation or configuration according to a transmission path node between a source node and an intermediate node, and the node in the standby path does not include the nodes which have already been passed through in the message transmission path.

In actual application, in the message transmission process, when the link between the first node and the second node fails, whether the first node has the standby path for the message transmission path may be first judged; if yes, the first node switches the message transmission path to the standby path; if no, the first node acquires an upstream node of the first node according to the segment list information and sends a notification to the upstream node.

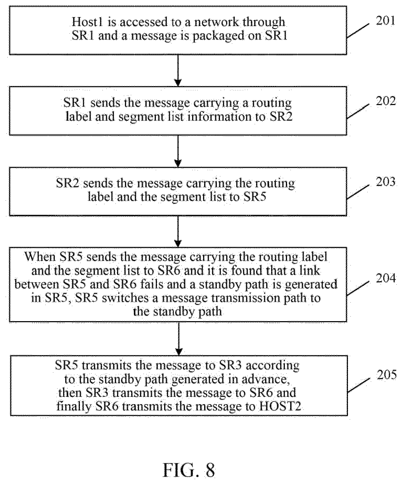

Taking a network topology structure illustrated in FIG. 7 as an example, when HOST1 and HOST2 communicate, the topology structure, i.e., the SR domain includes six SR, i.e., SR1-SR6, and supposing that a link between SR5 and SR6 fails and a standby path for the message transmission path is already generated in SR5 according to configuration or a policy, a processing procedure of an application example of the message transmission method provided by Embodiment 1 of the present invention, as illustrated in FIG. 8, includes the following steps:
in step 201, Host1 is accessed to a network through SR1 and a message is packaged on SR1;
specifically, a transmission path of the message, i.e., segment routing information, is designated as SR1-SR2-SR5-SR6; and the packaged message carries a routing label and segment list information, the routing label is used for indicating that the message carries the segment list information, and the segment list information is used for representing a transmission path of the message;
here, the segment list information is a segment list;
in step 202, SR1 sends the message carrying the routing label and the segment list information to SR2;
specifically, the routing label and the segment list can be carried in the form of an MPLS label;
herein, how SR1 sends the message carrying the routing label and the segment list to SR2 is the existing technology and thus is not repeated here.

In step 203, SR2 sends the message carrying the routing label and the segment list to SR5;
here, the method that SR2 sends the message carrying the routing label and the segment list to SR5 is the same as the method that SR1 sends the message carrying the routing label and the segment list to SR2.

In step 204, when SR5 sends the message carrying the routing label and the segment list to SR6 and it is found that a link between SR5 and SR6 fails and a standby path is generated in SR5, SR5 switches a message transmission path to the standby path;
herein, the standby path is acquired by configuration or computation according to a message transmission path configured or computed in advance in various nodes, such as SR5, indicated by a segment list, and a node in the standby path does not include a node which is already passed through in the message transmission path.

In an embodiment of the present invention, the standby path generated in advance in SR5 is SR5-SR3-SR6.

In step 205, SR5 transmits the message to SR3 according to the standby path generated in advance, then SR3 transmits the message to SR6, and finally SR6 transmits the message to HOST2.

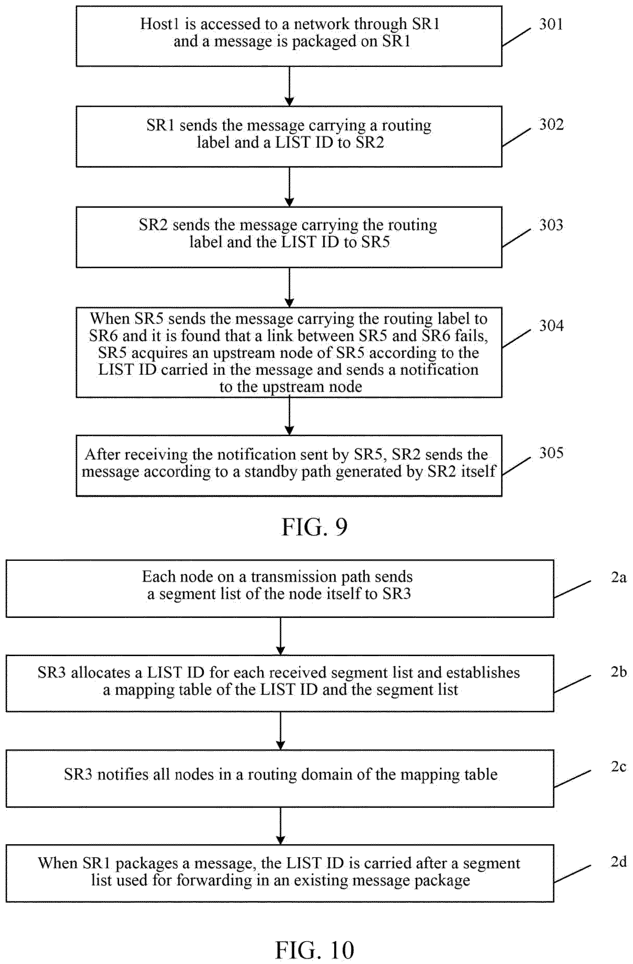

Taking a network topology structure illustrated in FIG. 7 as an example, when HOST1 and HOST2 communicate, the topology structure, i.e., an SR domain includes six SR, i.e., SR1-SR6, and supposing that a link between SR5 and SR6 fails and a standby path is not generated in SR5 according to configuration or a policy, a processing procedure of an application example of the message transmission method of Embodiment 2 of the present invention, as illustrated in FIG. 9, includes the following steps:
in step 301, Host1 is accessed to a network through SR1 and a message is packaged on SR1;
here, a message transmission path designated for Host1 to Host2 is SR1-SR2-SR5-SR6; and SR message is packaged on SR1, the message carries a routing label and segment list information, the routing label is used for indicating that the message carries the segment list information, and the segment list information is used for representing a transmission path of the message;
here, the segment list information is a LIST ID;
specifically, when the segment list information is the LIST ID, before the message is packaged, the method further includes performing management and notification to the LIST ID, and taking that SR3 is configured as a path management server of the SR domain as an example, a specific process of performing management and notification to the LIST ID, as illustrated in FIG. 10, includes the following steps:
   in step 2a, each node on a transmission path sends a segment list of the node itself to SR3;
   specifically, SR1, SR2, SR5 and SR6 respectively send a segment list thereof to SR3;
   herein, the segment list of SR1 is SR1-SR2-SR5-SR6, the segment list of SR2 is SR2-SR5-SR6, the segment list of SR5is SR5-SR6 and the segment list of SR6 is SR6.

In step 2b, SR3 allocates a LIST ID for each segment list received and establishes a mapping table of the LIST ID and the segment list;
specifically, the LIST ID allocated by SR3 for the segment list of SR1 is 1, the LIST ID allocated by SR3 for the segment list of SR2 is 2, the LIST ID allocated by SR3 for the segment list of SR5 is 3 and the LIST ID allocated by SR3 for the segment list of SR6 is 4; and the mapping table of segment lists and LIST IDs of various nodes is as illustrated in Table 1:

**Table 1**

| Node | Segment list | LIST ID |
|---|---|---|
| SR1 | SR1-SR2-SR5-SR6 | 1 |
| SR2 | SR2-SR5-SR6 | 2 |
| SR5 | SR5-SR6 | 3 |
| SR6 | SR6 | 4 |

In step 2c, SR3 notifies all nodes in a routing domain of the mapping table;
specifically, SR3 notifies SR1, SR2, SR5 and SR6 of the mapping table.

In step 2d, when SR1 packages a message, the LIST ID is carried after a segment list for forwarding in the existing message package;
herein, how SR1 specifically packages the message is the existing technology and thus is not repeated here.

In step 302, SR1 sends the message carrying a routing label and a LIST ID to SR2;
specifically, the routing label and the segment list can be carried in the form of an MPLS label;
herein, how SR1 sends the message carrying the routing label and the segment list to SR2 is the existing technology and thus is not repeated here.

In step 303, SR2 sends the message carrying the routing label and the LIST ID to SR5;
here, the method that SR2 sends the message carrying the routing label and the segment list to SR5 is the same as the method that SR1 sends the message carrying the routing label and the segment list to SR2.

In step 304, when SR5 sends the message carrying the routing label to SR6 and it is found that a link between SR5 and SR6 fails, SR5 acquires an upstream node of SR5 according to the LIST ID carried in the message and sends a notification to the upstream node;
specifically, SR5 carries a LIST ID value after determining the routing label according to the routing label carried in the message, queries the mapping table of its own segment list and LIST ID according to the LIST ID value, and determines that the segment list with the LIST ID value of 1 is SR1-SR2-SR5-SR6, thereby acquiring that an upstream of SR5 is SR2, and SR5 sends a notification to SR2; the notification is a link failure notification between SR5 and SR6.

In step 305, after receiving the notification sent by SR5, SR2 sends the message according to a standby path generated by itself;
specifically, SR2 sends the message to SR3, SR3 sends the message to SR6 after receiving the message, and SR6 sends the message to HOST2 after receiving the message.

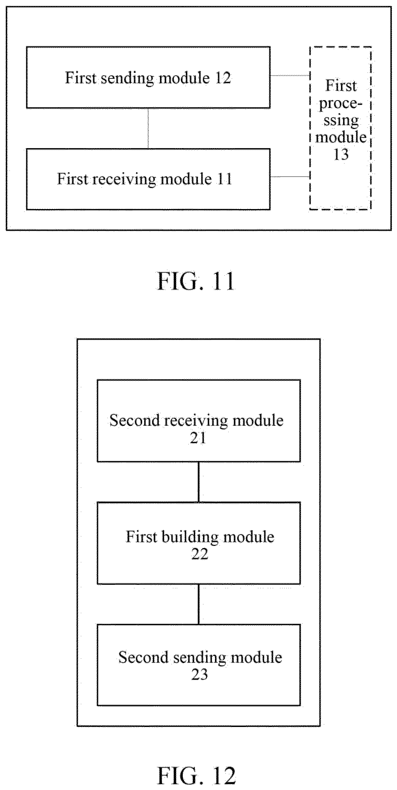

In order to implement the message transmission method, an embodiment of the present invention further provides a node, and the component structure of the node is as illustrated in FIG. 11, including a first receiving module 11 and a first sending module 12; herein,
the first receiving module 11 is arranged to receive a message carrying a routing label and segment list information; and
the first sending module 12 is arranged to send the message carrying the routing label and the segment list information received by the first receiving module 11;
herein, the routing label is used for indicating that the message carries the segment list information; and the segment list information is used for representing a transmission path of the message; the segment list information includes: a segment list or LIST ID; and the segment list includes: a length field, an option field, a segment list flag field, a reserved field and a segment value;
when the segment list information is the LIST ID, the first sending module 12 is further arranged to send a segment list of the node itself; correspondingly, the first receiving module 11 is further arranged to receive a mapping table of the LIST ID and the segment list.

When a transmission link fails in the message transmission process, the node further includes a first processing module 13, arranged to; when the transmission link fails in the message transmission process, acquire an upstream node of the node according to the segment list information and send a notification to the upstream node;
or the first processing module 13 is arranged to configure in advance a standby path for message transmission according to the segment list information, package segment list information of the standby path into the message and switch a message transmission path to the standby path;
herein, the standby path is a standby path for message transmission generated at each node in the message transmission process according to the message transmission path indicated by the segment list information; and the standby path is acquired by computation or configuration according to a transmission path node between a source node and an intermediate node, and the node in the standby path does not include nodes which have already been passed through in the message transmission path.

It needs to be stated that the node in the embodiment of the present invention is an intermediate node except an ingress node and an egress node in the message transmission path; the egress node in the message transmission path is only used for sending the message carrying the routing label and the segment list information; and the ingress node in the message transmission path is only used for receiving the message carrying the routing label and the segment list information.

In order to implement the above message transmission method, an embodiment of the present invention further provide a path management server, and the component structure of the path management server is as illustrated in FIG. 12, including: a second receiving module 21, a first building module 22 and a second sending module 23; herein,
the second receiving module 21 is arranged to receive segment lists of various nodes;
the first building module 22 is arranged to allocate a LIST ID for each segment list received by the second receiving module 21 and establish a mapping table of the LIST ID and the segment list; and
the second sending module 23 is arranged to notify all nodes of the mapping table established by the first building module 22.

Herein, the LIST ID is used for mapping a transmission path of a message, and is carried in the message and is transmitted along with the message in a message transmission process.

The path management server may be acted as by any node and may also be located on a controller or a server.

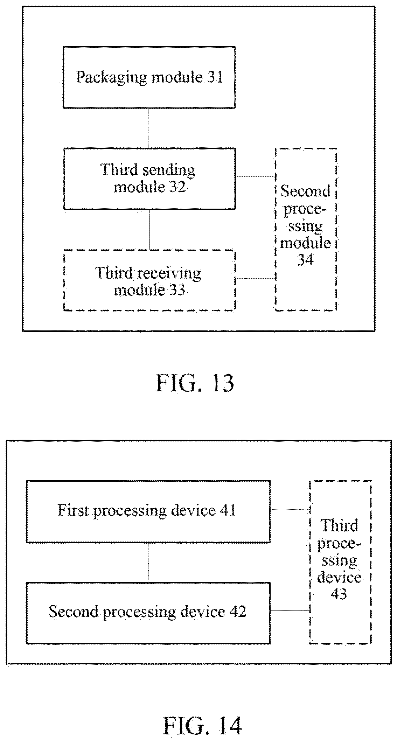

In order to implement the message transmission method, an embodiment of the present invention further provides another node, and the component structure of the node is as illustrated in FIG. 13, including: a packaging module 31 and a third sending module 32; herein,
the packaging module 31 is arranged to package a routing label and segment list information in a transmission message; and
the third sending module 32 is arranged to send the message carrying the routing label and the segment list information;
the routing label is used for indicating that the message carries the segment list information; and the segment list information is used for representing a transmission path of the message.

Herein, the segment list information includes: a segment list or a LIST ID.

Further, when the segment list information is the LIST ID, the node further includes a third receiving module 33 arranged to receive a mapping table of the LIST ID and the segment list;
correspondingly, the third sending module 32 is further arranged to send a segment list of the node itself.

Herein, the segment list includes: a length field, an option field, a segment list flag field, a reserved field and a segment value.

Further, the node further includes a second processing module 34, arranged to: when a transmission link fails in a message transmission process, configure or compute in advance a standby path for message transmission according to the segment list information, package segment list information of the standby path into the message, and switch a message transmission path to the standby path.

In order to implement the message transmission method, an embodiment of the present invention further provides another node, and the component structure of the node is as illustrated in FIG. 14, including: a first processing device 41 and a second processing device 42; herein,
the first processing device 41 is arranged to receive a message carrying a routing label and segment list information;
the second processing device 43 is arranged to send the message carrying the routing label and the segment list information;
the routing label is used for indicating that the message carries the segment list information; and the segment list information is used for representing a transmission path of the message.

Further, the node further includes a third processing device 43, arranged to: when a transmission link fails in a message transmission process, acquire an upstream node of the node according to the segment list information and send a notification to the upstream node;
or arranged to configure or compute in advance a standby path for message transmission according to the segment list information, package segment list information of the standby path into the message, and switch a message transmission path to the standby path.

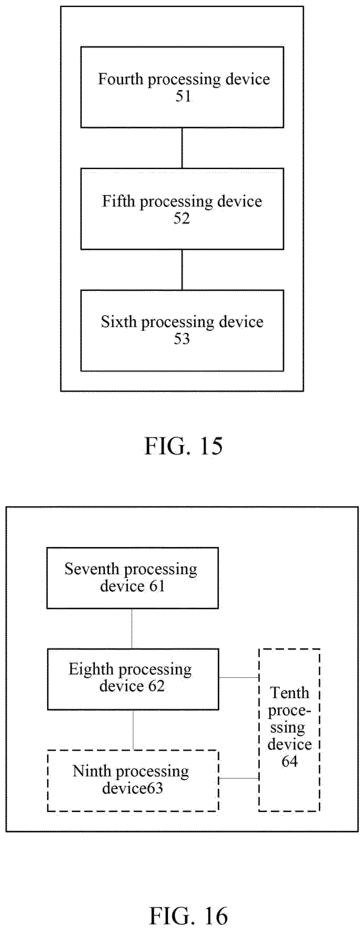

In order to implement the message transmission method, an embodiment of the present invention further provides a path management server, and the component structure of the path management server is as illustrated in FIG. 15, including: a fourth processing device 51, a fifth processing device 52 and a sixth processing device 53; herein,
the fourth processing device 51 is arranged to receive segment lists of various nodes;
the fifth processing device 52 is arranged to allocate a LIST ID for each segment list received by the fourth processing device 51 and establish a mapping table of the LIST ID and the segment list;
the sixth processing device 53 is arranged to notify all nodes of the mapping table established by the fifth processing device 52; and
the LIST ID is used for mapping a transmission path of a message and is carried in the message, and is transmitted along with the message in a message transmission process.

In order to implement the message transmission method, an embodiment of the present invention further provides another node, and the component structure of the node is as illustrated in FIG. 16, including: a seventh processing device 61 and an eighth processing device 62; herein,
the seventh processing device 61 is arranged to package a routing label and segment list information in a transmission message; and
the eighth processing device 62 is arranged to send the message carrying the routing label and the segment list information;
the routing label is used for indicating that the message carries the segment list information; and the segment list information is used for representing a transmission path of the message.

Further, when the segment list information is a LIST ID, the node further includes a ninth processing device 63 arranged to receive a mapping table of the LIST ID and the segment list;
correspondingly, the eighth processing device 62 is further arranged to send a segment list of the node itself.

Further, the node further includes a tenth processing device 64, arranged to: when a transmission link fails in a message transmission process, configure or compute in advance a standby path for message transmission according to the segment list information, package segment list information of the standby path into the message, and switch a message transmission path to the standby path.

The first receiving module 11, the first sending module 12, the first processing module 12, the packaging module 31, the third sending module 32, the third receiving module 33 and the second processing module 34 in the nodes provided by the embodiments of the present invention all may be implemented by a processor, and of course, may also be implemented by a specific logic circuit; herein the processor may be a processor on a node, and in actual application, the processor may be a Central Processing Unit (CPU), a Micro Processing Unit (MPU), a Digital Signal Processor (DSP) or a Field Programmable Gate Array (FPGA).

The second receiving module 21, the first building module 22 and the second sending module 23 in the path management server provided by the embodiments of the present invention all may be implemented by a processor, and of course, may also be implemented by a specific logic circuit; herein the processor may be a processor on a node, a controller or a server, and in actual application, the processor may be a CPU, an MPU, a DSP or an FPGA.

The first processing device 41, the second processing device 42, the third processing device 43, the seventh processing device 61, the eighth processing device 62, the ninth processing device 63 and the tenth processing device 64 in the nodes provided by the embodiments of the present invention all may be implemented by a processor, and of course, may also be implemented by a specific logic circuit; herein the processor may be a processor on a node, and in actual application, the processor may be a CPU, an MPU, a DSP or an FPGA.

The fourth processing device 51, the fifth processing device 52 and the sixth processing device 53 in the path management server provided by the embodiments of the present invention all may be implemented by a processor, and of course, may also be implemented by a specific logic circuit; herein the processor may be a processor on a node, a controller or a server, and in actual application, the processor may be a CPU, an MPU, a DSP or an FPGA.

In the embodiments of the present invention, if the above message transmission method is implemented in the form of a software function module that is also sold or used as an independent product, it may also be stored in a computer readable storage medium. Based on such understanding, the technical solution of the embodiments of the present invention substantially may be reflected in the form of a software product, or the part that makes a contribution to the existing technologies may be reflected in the form of a software product, and the computer software product is stored in a storage medium and includes several instructions for enabling a computer device (which may be a personal computer, a server, a network device or the like) to execute all or part of steps of the method provided by various embodiments of the present invention. The foregoing storage medium includes various mediums that can store program codes, such as USB flash disks, mobile hard disk, Read Only Memories (ROMs), magnetic disks or compact disks. In this way, the embodiments of the present invention are not limited to any specific combination of hardware and software.

Correspondingly, an embodiment of the present invention further provides a computer storage medium, storing a computer program used for executing the above message transmission method of the embodiment of the present invention.

## Claims

1. A message transmission method, applied to domain of segment routing technology, comprising:
carrying a routing label and segment list information in a message (101), and transmitting the routing label and the segment list information along with the message in a message transmission process (102);
wherein the routing label is used for indicating that the message carries the segment list information, and the segment list information is used for representing a transmission path of the message,
and being **characterized by**
the segment list information comprises: a segment list identity, LIST ID, and the method further comprises:
sending, by a message transmission node to a path management server, a segment list of the message transmission node itself and receiving from the path management server a mapping table of the LIST ID and the segment list.

2. The message transmission method according to claim 1, wherein the method further comprises: in the message transmission process, when a link between a first node and a second node fails, acquiring, by the first node, an upstream node of the first node according to the segment list information and sending a notification to the upstream node;
or
wherein the method further comprises: configuring or computing a standby path for message transmission according to the segment list information;
correspondingly, the method further comprises: in the message transmission process, when a link between a first node and a second node fails, switching, by the first node, a message transmission path to the standby path.

3. A node, applied to domain of segment routing technology, comprising a first receiving module (11) and a first sending module (12); wherein,
the first receiving module (11) is arranged to receive a message carrying a routing label and segment list information;
the first sending module (12) is arranged to send the message carrying the routing label and the segment list information;
the routing label is used for indicating that the message carries the segment list information, and the segment list information is used for representing a transmission path of the message,
wherein the segment list information comprises: a LIST ID, and being **characterized by** the first sending module (12) is further arranged to send to a path management server a segment list of the node itself;
the first receiving module (11) is further arranged to receive from the path management server a mapping table of the LIST ID and the segment list.

4. The node according to claim 3, wherein the node further comprises:
a first processing module (13), arranged to: when a transmission link fails in a message transmission process, acquire an upstream node of the node according to the segment list information and send a notification to the upstream node;
or, arranged to: configure or compute in advance a standby path for message transmission according to the segment list information, package segment list information of the standby path into the message and switch a message transmission path to the standby path.

5. The node according to claim 3, further comprising: a packaging module (31) and a third sending module (32); wherein,
the packaging module (31) is arranged to package a routing label and segment list information in a transmission message;
the third sending module (32) is arranged to send a message carrying the routing label and the segment list information.

6. The node according to claim 5, wherein the node further comprises: a third receiving module (33) arranged to receive a mapping table of the LIST ID and a segment list;
correspondingly, the third sending module (32) is further arranged to send a segment list of the node itself.

7. The node according to claim 5, wherein the node further comprises:
a second processing module (34), arranged to: when a transmission link fails in a message transmission process, configure or compute in advance a standby path for message transmission according to the segment list information, package segment list information of the standby path into the message and switch a message transmission path to the standby path.

8. A path management server, applied to domain of segment routing technology, **characterized by** comprising: a second receiving module (21), a first building module (22) and a second sending module (23); wherein,
the second receiving module (21) is arranged to receive segment lists of various nodes;
the first building module (22) is arranged to allocate a LIST ID for each segment list received by the second receiving module and establish a mapping table of the LIST ID and the segment list;
the second sending module (23) is arranged to notify all nodes of the mapping table established by the first building module (22);
the LIST ID is used for mapping a transmission path of a message and is carried in the message, and the LIST ID is transmitted along with the message in a message transmission process.

9. A computer storage medium, applied to domain of segment routing technology, **characterized by** storing computer-executable instructions used for executing the message transmission method according to claim 1 or 2.

## Patentansprüche

1. Nachrichtenübertragungsverfahren für Anwendung im Bereich von Segmentroutingtechnologien, umfassend:
Hinzufügen eines Routinglabels und einer Segementlisteninformation einer Nachricht (101), und Übertragen des Routinglabels und der Segementlisteninformation zusammen mit der Nachricht in einem Nachrichtenübertragungsprozess (102),
wobei das Routinglabel zur Angabe, dass die Nachricht die Segmentlisteninformation trägt, dient und die Segmentlisteninformation zur Darstellung eines Übertragungspfads der Nachricht dient,
und **dadurch gekennzeichnet, dass**
die Segmentlisteninformation eine Segmentlistenidentität, LIST ID, umfasst, und dass das Verfahren weiterhin umfasst:
Senden einer Segmentliste eines Nachrichtenübertragungsknotens durch den Nachrichtenübertragungsknoten selbst an einen Pfadverwaltungsserver, und Empfangen einer Abbildungstabelle für LIST ID und die Segmentliste aus dem Pfadverwaltungsserver.

2. Nachrichtenübertragungsverfahren nach Anspruch 1, wobei das Verfahren weiterhin umfasst: Ermitteln eines einem ersten Knoten vorgeschalteten Knotens durch den ersten Knoten gemäß der Segmentlisteninformation und Senden einer Mitteilung an den vorgeschalteten Knoten, wenn im Nachrichtenübertragungsprozess eine Verbindung zwischen dem ersten Knoten und einem zweiten Knoten ausfällt;
oder
wobei das Verfahren weiterhin umfasst: Konfigurieren oder Berechnen eines Standby-Pfads für Nachrichtenübertragung gemäß der Segmentlisteninformation;
wobei das Verfahren dementsprechend weiterhin umfasst:
Umschalten von einem Nachrichtenübertragungspfad auf den Standby-Pfad durch den ersten Knoten, wenn im Nachrichtenübertragungsprozess eine Verbindung zwischen dem ersten Knoten und dem zweiten Knoten ausfällt.

3. Knoten für Anwendung im Bereich von Segmentroutingtechnologien, umfassend:
ein erstes Empfangsmodul (11) und ein erstes Sendermodul (12); wobei
das erste Empfangsmodul (11) dazu eingerichtet ist, eine Nachricht, die ein Routinglabel und eine Segmentlisteninformation trägt, zu empfangen;
das erste Sendermodul (12) dazu eingerichtet ist, die Nachricht, die das Routinglabel und die Segmentlisteninformation trägt, zu senden;
das Routinglabel zur Angabe, dass die Nachricht die Segmentlisteninformation trägt, dient und die Segmentlisteninformation zur Darstellung eines Übertragungspfads der Nachricht dient,
wobei die Segmentlisteninformation eine LIST ID umfasst, und **dadurch gekennzeichnet, dass**
das erste Sendermodul (12) weiterhin dazu eingerichtet ist, eine Segmentliste des Knotens selbst an einen Pfadverwaltungsserver zu senden; und
das erste Empfangsmodul (11) weiterhin dazu eingerichtet ist, eine Abbildungstabelle für LIST ID und die Segmentliste aus dem Pfadverwaltungsserver zu empfangen.

4. Knoten nach Anspruch 3, wobei der Knoten weiterhin umfasst:
ein erstes Verarbeitungsmodul (13), welches dazu eingerichtet ist, einen dem Knoten vorgeschalteten Knoten gemäß der Segmentlisteninformation zu ermitteln und eine Mitteilung an den vorgeschalteten Knoten zu senden, wenn in einem Nachrichtenübertragungsprozess eine Übertragungsverbindung ausfällt;
oder dazu eingerichtet ist, einen Standby-Pfad für Nachrichtenübertragung gemäß der Segmentlisteninformation vorher zu konfigurieren oder berechnen, die Segmentlisteninformation des Standby-Pfads in die Nachricht zu verpacken, und von einem Nachrichtenübertragungspfad auf den Standby-Pfad umzuschalten.

5. Knoten nach Anspruch 3, ferner umfassend: ein Verpackungsmodul (31) und ein drittes Sendermodul (32); wobei
das Verpackungsmodul (31) dazu eingerichtet ist, ein Routinglabel und eine Segmentlisteninformation in eine Übertragungsnachricht zu verpacken; und
das dritte Sendermodul (32) dazu eingerichtet ist, eine Nachricht, die das Routinglabel und die Segmentlisteninformation trägt, zu senden.

6. Knoten nach Anspruch 5, wobei der Knoten weiterhin umfasst: ein drittes Empfangsmodul (33), welches dazu eingerichtet ist, eine Abbildungstabelle für LIST ID und eine Segmentliste zu empfangen;
und dementsprechend das dritte Sendermodul (32) weiterhin dazu eingerichtet ist, eine Segmentliste des Knotens selbst zu senden.

7. Knoten nach Anspruch 5, wobei der Knoten weiterhin umfasst:
ein zweites Verarbeitungsmodul (34), welches dazu eingerichtet ist, einen Standby-Pfad für Nachrichtenübertragung gemäß der Segmentlisteninformation vorher zu konfigurieren oder berechnen, die Segmentlisteninformation des Standby-Pfads in die Nachricht zu verpacken, und von einem Nachrichtenübertragungspfad auf den Standby-Pfad umzuschalten, wenn in einem Nachrichtenübertragungsprozess eine Übertragungsverbindung ausfällt.

8. Pfadverwaltungsserver für Anwendung im Bereich von Segmentroutingtechnologien, **dadurch gekennzeichnet, dass** er umfasst: ein zweites Empfangsmodul (21), ein erstes Etablierungsmodul (22) und ein zweites Sendermodul (23); wobei
das zweite Empfangsmodul (21) dazu eingerichtet ist, Segmentlisten unterschiedlicher Knoten zu empfangen; das erste Etablierungsmodul (22) dazu eingerichtet ist, eine LIST ID für jede vom zweiten Empfangsmodul empfangene Segmentliste zuzuweisen und eine Abbildungstabelle für LIST ID und die Segmentliste zu etablieren;
das zweite Sendermodul (23) dazu eingerichtet ist, allen Knoten der durch das erste Etablierungsmodul (22) etablierte Abbildungstabelle zu berichten;
die LIST ID zur Abbildung eines Übertragungspfads einer Nachricht verwendet wird, in der Nachricht getragen wird, und zusammen mit der Nachricht in einem Nachrichtenübertragungsprozess übertragen wird.

9. Computerspeichermedium für Anwendung im Bereich von Segmentroutingtechnologien, **dadurch gekennzeichnet, dass** in dem Computerspeichermedium computerausführbare Anweisungen für das Ausführen eines Nachrichtenübertragungsverfahrens nach Anspruch 1 oder 2 gespeichert sind.

## Revendications

1. Procédé de transmission de messages, utilisé dans le domaine de la technologie de routage de segments, comprenant :
véhiculer un label de routage et des informations de liste de segments dans un message (101), et transmettre le label de routage et les informations de liste de segments avec le message dans un processus de transmission de messages (102) ;
dans lequel le label de routage est utilisée pour indiquer que le message véhicule les informations de liste de segments, et les informations de liste de segments sont utilisées pour représenter un chemin de transmission du message,
**caractérisé en ce que** les informations de liste de segments comprennent : une identité de liste de segments, LIST ID, et le procédé comprend en outre :
envoyer, par un nœud de transmission de messages, à un serveur de gestion de chemins, une liste de segments du nœud de transmission de messages lui-même ; et recevoir depuis le serveur de gestion de chemins, une table de mappage de LIST ID et de la liste de segments.

2. Procédé de transmission de messages selon la revendication 1, dans lequel le procédé comprend en outre : lorsqu'une liaison entre un premier nœud et un deuxième nœud échoue dans le processus de transmission de messages, acquérir, par le premier nœud, un nœud en amont du premier nœud sur la base des informations de liste de segments et envoyer une notification au nœud amont ;
ou
dans lequel le procédé comprend en outre : configurer ou calculer un chemin d'attente pour transmettre les messages sur la base des informations de liste de segments ;
de manière correspondante, le procédé comprend en outre : lorsqu'une liaison entre un premier nœud et un deuxième nœud échoue dans le processus de transmission de messages, passer, à travers le premier nœud, un chemin de transmission de messages au chemin d'attente.

3. Nœud, utilisé dans le domaine de la technologie de routage de segments, comprenant
un premier module de réception (11) et un premier module d'envoi (12) ; dans lequel,
le premier module de réception (11) est configuré pour recevoir un message véhiculant un label de routage et des informations de liste de segments ;
le premier module d'envoi (12) est configuré pour envoyer le message véhiculant le label de routage et les informations de liste de segments ;
le label de routage est utilisé pour indiquer que le message véhicule les informations de liste de segments, et les informations de liste de segments sont utilisées pour représenter un chemin de transmission de messages,
dans lequel les informations de liste de segments comprennent : un LIST ID, **caractérisé en ce que**, le premier module d'envoi (12) est configuré en outre pour envoyer une liste de segments du nœud lui-même à un serveur de gestion de chemins ;
le premier module de réception (11) est configuré en outre pour recevoir une table de mappage de l'LIST ID et de la liste de segments depuis le serveur de gestion de chemins.

4. Nœud selon la revendication 3, dans lequel le nœud comprend en outre :
un premier module de traitement (13), configuré pour : lorsqu'une liaison de transmission échoue dans un processus de transmission de messages, acquérir un nœud en amont du nœud sur la base des informations de liste de segments et envoyer une notification au nœud en amont
ou, configuré pour : configurer ou calculer à l'avance un chemin d'attente pour transmettre les messages sur la base des informations de liste de segments, conditionner les informations de liste de segments du chemin d'attente dans le message et passer d'un chemin de transmission de messages au chemin d'attente.

5. Nœud selon la revendication 3, comprenant en outre : un module de conditionnement (31) et un troisième module d'envoi (32) ; dans lequel,
le module de conditionnement (31) est configuré pour conditionner un label de routage et des informations de liste de segments dans un message de transmission ;
et le troisième module d'envoi (32) est configuré pour envoyer un message véhiculant le label de routage et les informations de liste de segments.

6. Nœud selon la revendication 5, dans lequel le nœud comprend en outre : un troisième module de réception (33) configuré pour recevoir une table de mappage du LIST ID et une liste de segments ;
de manière correspondante, le troisième module d'envoi (32) est configuré en outre pour envoyer une liste de segments du nœud lui-même.

7. Nœud selon la revendication 5, dans lequel le nœud comprend en outre :
un deuxième module de traitement (34), configuré pour : lorsqu'une liaison de transmission échoue dans un processus de transmission de messages, configurer ou calculer à l'avance un chemin d'attente pour transmettre les messages sur la base des informations de liste de segments, conditionner les informations de liste de segments du chemin d'attente dans le message et passer d'un chemin de transmission de messages au chemin d'attente.

8. Serveur de gestion de chemins, utilisé dans le domaine de la technologie de routage de segments, **caractérisé en ce qu'**il comprend : un deuxième module de réception (21), un premier module de construction (22) et un deuxième module d'envoi (23) ; dans lequel,
le deuxième module de réception (21) est configuré pour recevoir des listes de segments de divers nœuds ;
le premier module de construction (22) est configuré pour distribuer un LIST ID pour chaque liste de segments reçue par le deuxième module de réception et établir une table de mappage du LIST ID et de la liste de segments ;
le deuxième module d'envoi (23) est configuré pour notifier tous les noeuds de la table de mappage établie par le premier module de construction (22) ;
le LIST ID est utilisé pour mapper un chemin de transmission d'un message et est véhiculé dans le message, et le LIST ID est transmis avec le message dans un processus de transmission de messages.

9. Support de stockage informatique, utilisé dans le domaine de la technologie de routage de segments, **caractérisé en ce qu'**il stocke des instructions exécutables par ordinateur pour exécuter le procédé de transmission de messages selon la revendication 1 ou 2.
